# EUROPEAN PATENT APPLICATION

(11) **EP 4 620 581 A1**
(43) Date of publication of application: **24.09.2025**
(21) Application number: 24875733.8
(22) Date of filing: 22.07.2024
(51) Int. Cl.: B05D 5/10, B05C 11/10, B05C 13/02

(54) **WATER COOLING PLATE ADHESIVE APPLICATION METHOD AND SYSTEM, AND STORAGE MEDIUM**

(30) Priority: 01.02.2024 CN 202410140291
(71) Applicant: Contemporary Amperex Technology Co., Limited, Ningde, Fujian 352100 (CN)
(72) Inventor: JING, Hehe, Ningde, Fujian 352100 (CN); CAO, Xin, Ningde, Fujian 352100 (CN); JING, Zhiyong, Ningde, Fujian 352100 (CN); LUO, Jian, Ningde, Fujian 352100 (CN)
(74) Representative: Ran, Handong
(86) International application number: PCT/CN2024/106780
(87) International publication number: WO 2025/161288

(57) **Abstract**

Embodiments of the present application provide a method for coating a glue on a water-cooling plate, a system for coating a glue on a water-cooling plate, and a storage medium, and belong to the technical field of batteries. The method comprises acquiring a first image and a second image comprising the water-cooling plate; determining a deviation between a placement position and a preset position of the water-cooling plate based on the first image and the second image; regulating a glue coating trajectory based on the deviation between the placement position and the preset position of the water-cooling plate; and coating the glue on the water-cooling plate based on the regulated glue coating trajectory. **In** the above technical solutions, whether a deviation exists in the placement position of the water-cooling plate can be determined by image analysis, and when the deviation exists, the glue coating trajectory can be regulated based on the deviation between the placement position and the preset position, thereby coating the glue based on an accurate glue coating trajectory, avoiding non-uniform glue coating, capable of automatically regulating the glue coating position, improving the glue coating accuracy, and further improving the qualified rate and quality of the glue coating. **In** addition, the solutions provided in the present application can be adapted to water-cooling plates of different types and sizes.

## Description

### RELATED APPLICATION

The present application claims priority to Chinese Patent Application No. 202410140291.8 filed on 1 February 2024, the entire content of which is incorporated herein by reference.

### TECHNICAL FIELD

The present application belongs to the technical field of batteries, and particularly relates to a method for coating a glue on a water-cooling plate, a system for coating a glue on a water-cooling plate, and a storage medium.

### BACKGROUND

In a power battery system, the water-cooling plate is one of the key components in a battery pack, and is configured to implement heat dissipation and temperature control of the power battery system. The water-cooling plate and a battery cell in the battery pack are usually bonded together with a glue. In a production process of the battery pack, it is necessary to coat the glue on the water-cooling plate, and then place the battery cell on the glue-coated water-cooling plate. The glue coating quality of the water-cooling plate has an important influence on the quality of the battery pack. Therefore, how to improve the glue coating quality on the water-cooling plate is a to-be-solved problem.

### SUMMARY OF THE INVENTION

In view of the above technical problems, embodiments of the present application provide a method for coating a glue on a water-cooling plate, a system for coating a glue on a water-cooling plate, and a storage medium, which can improve the glue coating quality on the water-cooling plate, and improve the qualified rate of glue coating.

In a first aspect, an embodiment of the present application provides a method for coating a glue on a water-cooling plate, comprising: acquiring a first image and a second image comprising the water-cooling plate; determining a deviation between a placement position and a preset position of the water-cooling plate based on the first image and the second image, wherein the second image shows the water-cooling plate placed at the preset position; regulating a glue coating trajectory based on the deviation between the placement position and the preset position of the water-cooling plate; and coating the glue on the water-cooling plate based on the regulated glue coating trajectory.

In the above technical solutions, in a glue coating process, after the water-cooling plate is placed at a glue coating position, the first image can be acquired, whether a deviation exists in the placement position of the water-cooling plate can be determined by comparison between the first image and the second image, and when the deviation exists, the glue coating trajectory can be regulated based on the deviation between the placement position and the preset position, thereby coating the glue based on an accurate glue coating trajectory, avoiding non-uniform glue coating, automatically regulating the glue coating position, improving the glue coating accuracy, and further improving the qualified rate and quality of the glue coating. In addition, the solutions provided in the present application can be adapted to water-cooling plates of different types and sizes.

In some embodiments, the determining the deviation between the placement position and the preset position of the water-cooling plate based on the first image and the second image comprises: determining first position information of a first region of the water-cooling plate in the first image, and second position information of the first region of the water-cooling plate in the second image; and determining the deviation between the placement position and the preset position of the water-cooling plate based on the first position information and the second position information.

In some embodiments, the deviation comprises a deviation value and a deviation direction, and the regulating the glue coating trajectory based on the deviation between the placement position and the preset position of the water-cooling plate comprises: regulating the glue coating trajectory based on the deviation value and the deviation direction between the placement position and the preset position of the water-cooling plate. The deviation direction refers to a direction in which the placement position of the water-cooling plate deviates from the preset position, comprising up, down, left, and right directions on a horizontal plane. The deviation value is a distance between the placement position and the preset position of the water-cooling plate. The glue coating position is automatically regulated based on the deviation value and the deviation direction, to improve the glue coating accuracy.

In some embodiments, the method further comprises: regulating a motion trajectory of an apparatus for transporting the water-cooling plate based on the deviation between the placement position and the preset position of the water-cooling plate.

The apparatus for transporting the water-cooling plate may be a robot. After the deviation between the placement position and the preset position of the water-cooling plate is calculated, a motion trajectory of the robot gripper can be regulated based on the deviation, and information of the position where the water-cooling plate is gripped can be updated, thereby reducing a deviation between a next placement position and the preset position of the water-cooling plate. By continuously calculating the deviation and regulating the motion trajectory of the robot, the deviation can be gradually reduced, and the motion trajectory of the robot can be regulated towards the standard trajectory, thereby adaptively regulating the motion trajectory of the robot.

In some embodiments, after the coating the glue on the water-cooling plate, the method further comprises: acquiring a third image, the third image comprising the glue-coated water-cooling plate; and determining whether the glue-coated water-cooling plate is a qualified product based on the third image. In the present application, after the glue is coated on the water-cooling plate based on the regulated glue coating trajectory, the third image can be acquired, and the glue coating quality can be analyzed based on the third image to determine whether the glue coating is qualified, thereby improving the product quality.

In some embodiments, the determining whether the glue-coated water-cooling plate is a qualified product based on the third image comprises: acquiring a first parameter based on the third image, wherein the first parameter represents glue coating quality; and determining whether the glue-coated water-cooling plate is a qualified product based on the first parameter.

In some embodiments, the first parameter comprises at least one of: the number of glue lines, a spacing between the glue lines, width of each glue line, and a distance between the glue line and an edge of the water-cooling plate.

In some embodiments, the determining whether the glue-coated water-cooling plate is a qualified product based on the first parameter comprises: determining that the glue-coated water-cooling plate is a qualified product if the first parameter satisfies a preset condition.

The first parameter is extracted for analysis, to avoid too large or too small number of glue lines, or too large or too small spacing between the glue lines, thereby avoiding the phenomena such as glue leakage and glue overflow, and improving the product quality.

In a second aspect, an embodiment of the present application provides an apparatus for coating a glue on a water-cooling plate, comprising: an acquisition module configured to acquire a first image comprising the water-cooling plate; and a processing module configured to determine a deviation between a placement position and a preset position of the water-cooling plate based on the first image and a second image, the water-cooling plate being placed at the preset position in the second image; regulate a glue coating trajectory based on the deviation between the placement position and the preset position of the water-cooling plate; and coat the glue on the water-cooling plate based on the regulated glue coating trajectory.

In a third aspect, an embodiment of the present application further provides a system for coating a glue on a water-cooling plate, comprising: a camera configured to acquire a first image comprising the water-cooling plate; a visual processor configured to acquire a second image, and determine a deviation between a placement position and a preset position of the water-cooling plate based on the first image and the second image; and a glue coating apparatus configured to regulate a glue coating trajectory based on the deviation between the placement position and the preset position of the water-cooling plate; and coat the glue on the water-cooling plate based on the regulated glue coating trajectory.

In a fourth aspect, an embodiment of the present application further provides a computer-readable storage medium, storing computer instructions which, when executed on a computer, cause the computer to perform the method according to the first aspect.

In a fifth aspect, an embodiment of the present application further provides a computer program product, comprising a computer program which, when running on a computer, implements the method according to the first aspect.

### DESCRIPTION OF DRAWINGS

In order to more clearly describe technical solutions of embodiments of the present application, drawings to be used in the description of the embodiments or the prior art will be briefly introduced below. Apparently, the drawings described below are merely some embodiments of the present application. For those of ordinary skills in the art, other drawings may also be obtained based on these drawings without creative work.
FIG. 1 is a schematic architectural diagram of a system for coating a glue on a water-cooling plate provided in an embodiment of the present application;
FIG. 2 is schematic flowchart of a method for coating a glue on a water-cooling plate provided in an embodiment of the present application;
FIG. 3 is a schematic diagram of an interface provided in an embodiment of the present application;
FIG. 4 is a schematic diagram of another interface provided in an embodiment of the present application;
FIG. 5 is a schematic diagram of a qualified glue-coated water-cooling plate provided in an embodiment of the present application;
FIG. 6 is a schematic diagram of comparison between a qualified product and a defective product provided in an embodiment of the present application;
FIG. 7 is a schematic structural diagram of a glue outlet part of a glue coating apparatus provided in an embodiment of the present application;
FIG. 8 is a schematic structural diagram of a glue coating robot part of a glue coating apparatus provided in an embodiment of the present application;
FIG. 9 is a schematic structural diagram of a protective bracket and a material trolley provided in an embodiment of the present application; and
FIG. 10 is a schematic structural diagram of a gripper part of a glue coating robot provided in an embodiment of the present application.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "comprising" and "having" and any variations thereof in the description and claims of the present application and the aforementioned description of the drawings are intended to cover non-exclusive inclusion.

In the description of the embodiments of the present application, the technical terms such as "first" and "second" are only used to distinguish between different objects, but cannot be understood as indicating or implying relative importance or implicitly indicating the number, particular order, or primary-secondary relationship of the indicated technical features. In the description of the embodiments of the present application, the "plurality" means two or more than two, unless otherwise explicitly and specifically defined.

Reference herein to an "embodiment" means that a particular feature, structure, or property described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that there is an "or" relationship between associated objects therebefore and thereafter.

The water-cooling plate is also referred to as a liquid-cooling plate. In a power battery system, the water-cooling plate is one of the key components in a battery pack, and is configured to implement heat dissipation and temperature control of the power battery system. Specifically, the battery generates excess heat during operation. The heat is transferred through the contact between the battery or module and the surface of the water-cooling plate, and is finally carried away by a coolant passing through the water-cooling plate.

The water-cooling plate and a battery cell in the battery pack are usually bonded together with a glue, and the glue has a heat-conducting function. In a production process of the battery pack, it is necessary to coat the glue on the water-cooling plate, and then place the battery cell on the glue-coated water-cooling plate for bonding. The glue coating quality of the water-cooling plate has an important influence on the quality of the battery pack. If the glue is not coated uniformly, the battery cell will not come into contact with the water-cooling plate tightly, and some regions do not contact with the water-cooling plate effectively, which will cause the battery pack to fail in prompt heat dissipation through the water-cooling plate during operation. Therefore, how to improve the glue coating quality on the water-cooling plate is a to-be-solved problem. The glue coating trajectory is one of the factors that affect the glue coating quality. After a machine has been running for a long time or for some other reasons, a deviation may exist in the running trajectory of the machine, so that the glue is not coated onto a place on the water-cooling plate where glue coating is needed, and then there is a too thick glue layer in some glue-coated regions and a too thin glue layer in some glue-coated regions, thereby resulting in the problems, such as non-uniform glue coating, glue leakage, and glue overflow.

To this end, the embodiments of the present application provide a method for coating a glue on a water-cooling plate, a system for coating a glue on a water-cooling plate, and a storage medium. In a glue coating process, whether a deviation exists in the glue coating position of the water-cooling plate is determined by image analysis, and the glue coating trajectory is regulated when the deviation exists, thereby implementing automatic regulation, size error proofing alarm, and position offset alarm of the glue coating position, and improving the qualified rate of the glue coating.

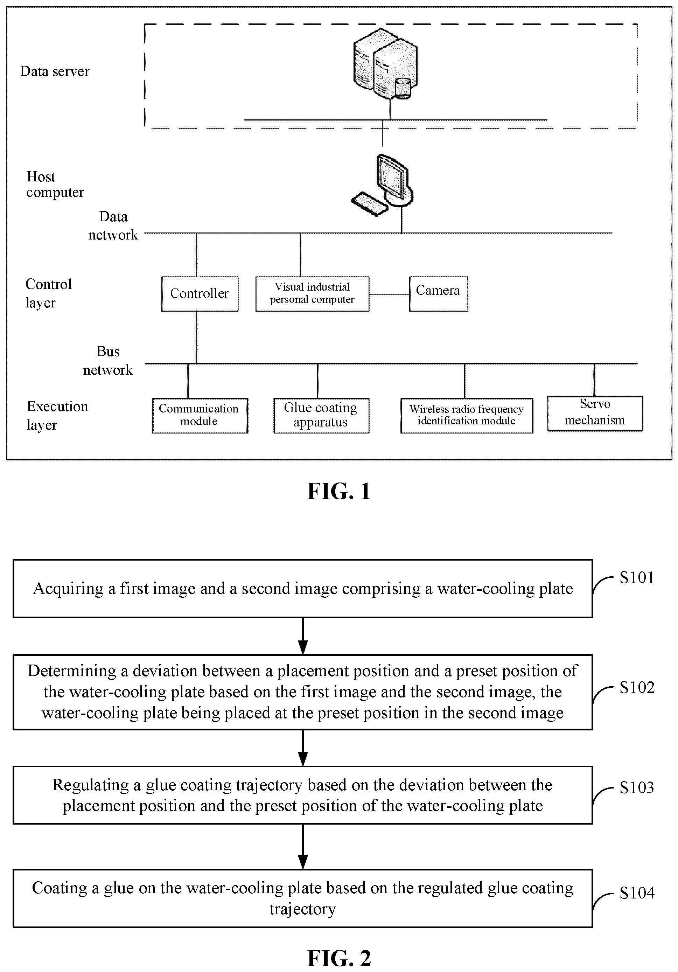

Detailed description is provided below with reference to the drawings. FIG. 1 is a system for coating a glue on a water-cooling plate provided in an embodiment of the present application. The system for coating a glue on a water-cooling plate comprises a control layer and an execution layer.

The control layer comprises a controller and a visual processing apparatus. The controller may be a Programmable Logic Controller (PLC) for controlling the operation of each actuator in the execution layer. The visual processing apparatus comprises a visual industrial personal computer and a camera. The camera collects images of the water-cooling plate before and after glue coating, and transfers the images to the visual industrial personal computer. The visual industrial personal computer can display and analyze the images of the water-cooling plate before and after glue coating, determine whether a deviation exists in a placement position of the water-cooling plate and whether the glue coating quality is qualified, and transfer the analysis result to the controller. The control layer may further comprise a touch screen, which can be used for operation and control by a skilled person in real time.

The execution layer comprises, e.g., a glue coating apparatus, a communication module, a wireless Radio Frequency Identification (RFID) module, and a servo mechanism. When the deviation exists in the placement position of the water-cooling plate, the controller sends deviation data to the glue coating apparatus, so that the glue coating apparatus can regulate the glue coating trajectory. Specifically, the glue coating apparatus comprises, e.g., a robot gripper, a glue coating nozzle, and a glue collection drum. The glue coating nozzle may be fixedly arranged, and during glue coating, the robot gripper grips the water-cooling plate to move. The wireless radio frequency identification module can read information of the water-cooling plate, and the servo mechanism is configured to implement motion functions of other apparatuses. The communication module is configured to implement data interaction between modules through a bus network.

In addition, the system for coating a glue on a water-cooling plate may further comprise a data server and a host computer. The data server, such as a Manufacturing Execution System (MES), can perform integrated management on the production process, resources, and data on the production line, and collect quality data in the production process, for real-time analysis and feedback. For example, the visual industrial personal computer can transfer the analysis result to the data server through a data network. When the analysis result is abnormal, the data server can give an alarm, and issue alarm information to the controller. The deployment position of the host computer is different from that of the data server. The host computer may be a computer configured to, e.g., store data, display production status, and issue an instruction, and can be operated by the skilled person. In the present application, the images are processed analyzed to determine the deviation and the glue coating quality, which can be completed by the visual industrial personal computer, or be completed by the host computer or the data server. The description is provided below with the visual industrial personal computer as an example.

In combination with the above system for coating a glue on a water-cooling plate, FIG. 2 is a method for coating a glue on a water-cooling plate provided in an embodiment of the present application. The method comprises the following steps S101 to S104.

S101: acquiring a first image and a second image comprising the water-cooling plate.

In the present application, a camera is provided for acquiring various images before and after the glue is coated on the water-cooling plate. Specifically, a robot gripper grips the water-cooling plate, places the water-cooling plate at a photographing position, and then sends information that the water-cooling plate is in place to a PLC. The PLC issues a photographing instruction to the camera. After receiving the photographing instruction, the camera takes a photo, and transfers the acquired image to a visual industrial personal computer, thereby acquiring the first image. The first image may comprise a complete water-cooling plate, or may only comprise a portion of the water-cooling plate.

1, 2, or more cameras may be arranged at fixed positions, and the positions of the cameras are arranged based on actual requirements, which is not limited in the embodiments of the present application. For example, the cameras are arranged to obtain a picture of a complete water-cooling plate. For example, 2 cameras may be arranged side by side, corresponding to the upper and lower parts or the left and right parts of the water-cooling plate respectively. The 2 cameras acquire partial images of the water-cooling plate respectively, and transfer the partial images to the visual industrial personal computer, which combines the partial images into the first image.

S102: determining a deviation between a placement position and a preset position of the water-cooling plate based on the first image and the second image, the water-cooling plate being placed at the preset position in the second image.

After the visual industrial personal computer acquires the first image, the visual industrial personal computer can acquire the second image from a database, and can determine, by comparison between the first image and the second image, whether there is a deviation between a current placement position and the preset position of the water-cooling plate.

The second image is an image pre-taken by the camera. In the second image, the deviation between the placement position and the preset position of the water-cooling plate in the second image is smaller than a preset threshold (deviation is at least 0). The preset position is a position without deviation. The preset position corresponds to a standard glue coating trajectory, which is a running trajectory that does not require deviation regulation. The second image is pre-stored in the database, which may be a local database of the visual industrial personal computer, or may be a database corresponding to a host computer or a data server. In actual production, corresponding second images may be selected based on water-cooling plates of different types and different sizes. A water-cooling plate of a given type and a given size may correspond to a plurality of second images, each of the second images corresponds to a different deviation, and the first image may be calculated or matched with the plurality of second images to determine the deviation between the placement position and the preset position of the water-cooling plate. The first image and the second image have an equal size.

S103: regulating a glue coating trajectory based on the deviation between the placement position and the preset position of the water-cooling plate.

In an implementation, when there is the deviation between the current placement position and the preset position of the water-cooling plate, the standard glue coating trajectory is regulated based on the deviation, and the glue is coated based on the regulated glue coating trajectory. When there is no deviation between the current placement position and the preset position of the water-cooling plate, the glue is coated based on the standard glue coating trajectory.

In another implementation, whether the deviation between the placement position and the preset position of the water-cooling plate is larger than the preset threshold is determined. If the deviation between the placement position and the preset position of the water-cooling plate is smaller than or equal to the preset threshold, the glue is coated based on the standard glue coating trajectory. If the deviation between the placement position and the preset position of the water-cooling plate is larger than the preset threshold, the standard glue coating trajectory is regulated based on the deviation, and the glue is coated based on the regulated glue coating trajectory.

The visual industrial personal computer can regulate the standard glue coating trajectory based on the deviation, determine the regulated glue coating trajectory, and send the regulated glue coating trajectory to the glue coating robot through the PLC. Alternatively, the visual industrial personal computer sends the deviation to the PLC, which sends the deviation to the glue coating robot, and the glue coating robot adaptively regulates the glue coating trajectory.

S104: coating the glue on the water-cooling plate based on the regulated glue coating trajectory.

In the present application, the glue coating nozzle may be fixed, and the glue coating robot grips the water-cooling plate to move for glue coating. The camera and the glue coating nozzle may be fixed on a given bracket, so that after the water-cooling plate is put in place and photographed, it is not necessary to move the water-cooling plate before starting the glue coating. Alternatively, the water-cooling plate may be fixed, and the glue coating robot may drive the glue coating nozzle to move for glue coating. A glue coating nozzle positioning apparatus may be provided to reduce errors, when the glue coating nozzle moves.

In the above technical solutions, in a glue coating process, after the water-cooling plate is placed by a robot hand at a glue coating position, the first image is acquired by the camera, whether a deviation exists in the placement position of the water-cooling plate is determined by comparison between the first image and the second image, and when the deviation exists, the glue coating trajectory is regulated based on the deviation between the placement position and the preset position, thereby coating the glue based on an accurate glue coating trajectory, avoiding non-uniform glue coating, automatically regulating the glue coating position, improving the glue coating accuracy, and further improving the qualified rate and quality of the glue coating. In addition, the present application can be adapted to water-cooling plates of different types and sizes.

The description is provided below when the water-cooling plate is placed, for example, at the preset position in the second image.

In some embodiments, the determining the deviation between the placement position and the preset position of the water-cooling plate based on the first image and the second image may specifically be overlapping the first image and the second image, and determining the deviation between the placement position and the preset position of the water-cooling plate based on a distance between a contour edge or a hole position of the water-cooling plate in the first image and the said contour edge or the said hole position of the water-cooling plate in the second image. For example, the deviation between the placement position and the preset position of the water-cooling plate may be determined based on a distance between a positioning hole of the water-cooling plate in the first image and the said positioning hole of the water-cooling plate in the second image. For example, when a horizontal distance between the left contour edge of the water-cooling plate in the first image and the left contour edge of the water-cooling plate in the second image is 10 mm, the placement position of the water-cooling plate deviates leftward or rightward from the preset position by 10 mm.

In some embodiments, the determining the deviation between the placement position and the preset position of the water-cooling plate based on the first image and the second image comprises: determining first position information of a first region of the water-cooling plate in the first image, and second position information of the first region of the water-cooling plate in the second image; and determining the deviation between the placement position and the preset position of the water-cooling plate based on the first position information and the second position information.

The first region may be the entire region of the water-cooling plate, or may be a partial region of the water-cooling plate, or may be some feature points on the water-cooling plate, such as the positioning hole. In the present application, the first region of the water-cooling plate is predetermined, thereby recognizing the first region of the water-cooling plate in the images in the glue coating process. The first region may be pre-annotated in the second image and saved as a template, thereby pre-obtaining the second position information.

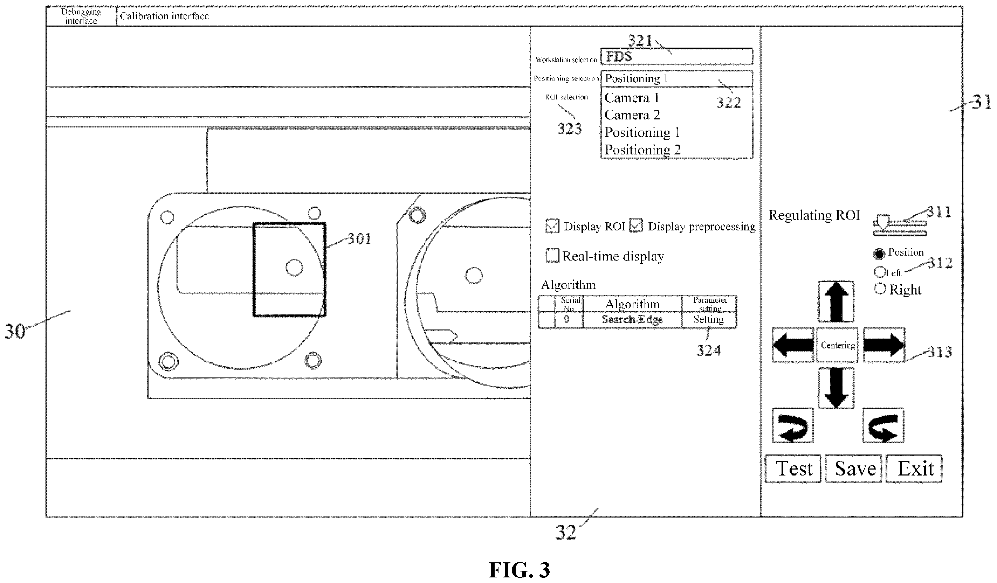

For example, FIG. 3 shows a schematic diagram of an interface for positioning a feature point. As shown in FIG. 3, the interface is regionalized into an acquired water-cooling plate image 30, a region 31, and a region 32. The region 31 is used to regulate a position of a region of interest (ROI frame), and the region 32 is used to select a template of the ROI frame. Referring to FIG. 3, the region 31 comprises a widget 311, a widget 312, a widget 313, a "test" widget, a "save" widget, and an "exit" widget. A skilled person can control the moving direction of the ROI frame through the widget 312, and control the moving distance of the ROI frame through the widget 311. For example, the position "left" can be selected to move the entire ROI frame leftward or upward, or the position "right" can be selected to move the entire ROI frame rightward or downward. The widget 313 comprises arrows for controlling the ROI frame to move in four directions, namely, upward, downward, leftward, and rightward, and to rotate leftward and rightward. The skilled person can further control a plurality of arrows in the widget 313 to control the moving direction and moving distance of the ROI frame. For example, by clicking the upward arrow, the ROI frame can move upward by a default distance. For example, by clicking the leftward rotation arrow, the ROI frame can rotate leftward by a default angle. Referring to FIG. 3, the region 32 comprises widgets 321, 322, 323, and 324 arranged from the top down. For different production requirements, different workstations, and different feature points, ROI frames with different parameters may be selected. Specifically, the skilled person can click the widget 321 to select a workstation, click the widget 322 to select a position of a positioning point, and click the widget 323 to select a template. When the template needs to be modified, the widget 324 can be clicked to modify template parameters or create a new template.

After the interface shown in FIG. 3 is displayed, a computator can frame a region of interest (ROI frame) on the water-cooling plate image 30, as shown in the black box 301. The region is the first region of the water-cooling plate. The position of the ROI detection frame is regulated through the widget 311, 312, or 313 to determine the first region of the water-cooling plate. After the regulation, the "test" may be clicked to perform a simulation run and display detection data. After the regulation is complete, the "save" may be clicked to save parameters modified this time, or the "exit" may be clicked not to save the parameters modified this time.

In an embodiment of the present application, a same coordinate system can be set for the first image and the second image based on the image size or other modes. The origin of the coordinate system may be any position in the images, which is not limited. The position information may be coordinates of the center point of the first region in the coordinate system. The first position information is coordinates of the current placement position, and the second position information is coordinates of the preset position. The first position information and the second position information are located in the same coordinate system.

After the first image is acquired, an image processing algorithm is used to recognize the first region of the water-cooling plate, and determine the first position information (x₁, y₁) of the first region of the water-cooling plate in the first image and the second position information (x₂, y₂) of the first region of the water-cooling plate in the second image. The deviation between the placement position and the preset position of the water-cooling plate can be determined based on the first position information and the second position information, and then the glue coating trajectory can be regulated based on the deviation between the placement position and the preset position of the water-cooling plate. For example, in a horizontal plane, the x-axis of the coordinate system may correspond to the left-right direction, the y-axis may correspond to the up-down direction, a difference value between x₁ and x₂ may be a left-right deviation, and a difference value between y₁ and y₂ may be an upper-lower deviation.

In some cases, the first region in the second image may also be extracted for subsequent comparison with the first region extracted from the first image.

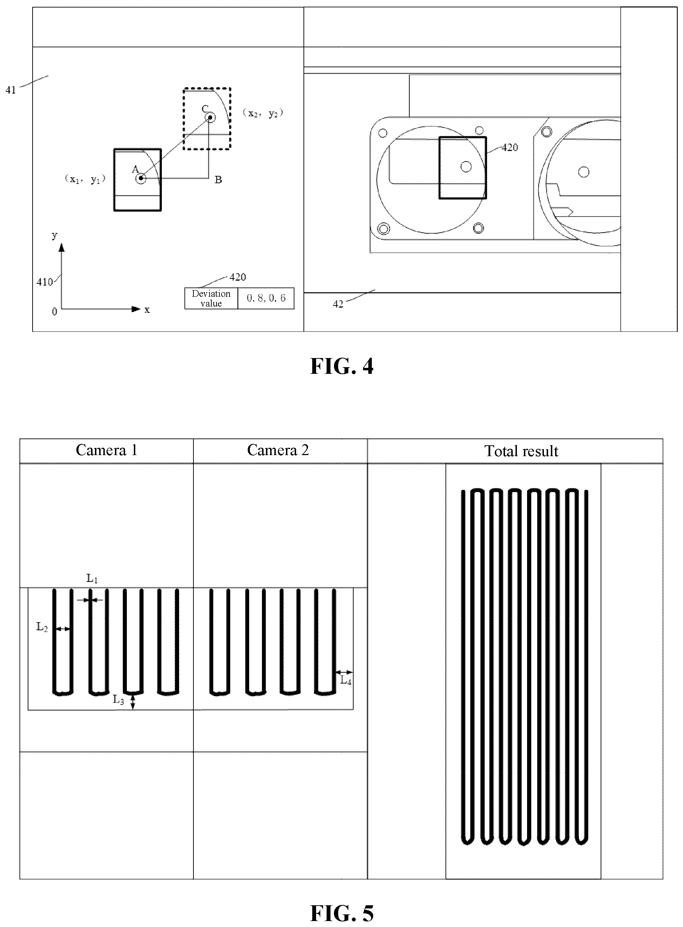

As an example, FIG. 4 shows a schematic diagram of an interface. As shown in FIG. 4, a left region 41 of the interface can display a deviation between the placement position and the preset position of the water-cooling plate, while a right region 42 can display a currently acquired first image and display an extracted ROI frame 420. Specifically, the region 41 displays a position A (x₁, y₁) of the first region of the water-cooling plate in a coordinate system 410 and a position C (x₂, y₂) of the first region of the water-cooling plate in the second image in the coordinate system this time. A difference value between x₁ and x₂ is AB, a difference value between y₁ and y₂ is BC, and specific values of AB and BC can be displayed in a numerical display frame 420. It should be noted that the ABC is annotated in the figure merely for ease of understanding, and may not be displayed in actual display.

In some embodiments, the deviation comprises a first deviation value and a deviation direction, and the regulating the glue coating trajectory based on the deviation between the placement position and the preset position of the water-cooling plate comprises: regulating the glue coating trajectory based on the first deviation value and the deviation direction between the placement position and the preset position of the water-cooling plate.

The deviation direction refers to a direction in which the placement position of the water-cooling plate deviates from the preset position, comprising up, down, left, and right directions on a horizontal plane. The deviation value is a distance between the placement position and the preset position of the water-cooling plate. For example, the left edge of the water-cooling plate in the first image is located to the left of the left edge of the water-cooling plate in the second image, and a distance therebetween is 10 mm, so that the placement position of the water-cooling plate deviates leftward by 10 mm. For example, if the upper edge of the water-cooling plate in the first image is below the upper edge of the water-cooling plate in the second image, and the distance therebetween is 10 mm, so that the placement position of the water-cooling plate deviates downward by 10 mm.

For example, the first deviation value and the deviation direction can be determined based on coordinates. Specifically, a value is obtained by subtracting x₂ from x₁. If the value is a negative value, it means that the placement position of the water-cooling plate deviates leftward. If the value is a positive value, it means that the placement position of the water-cooling plate deviates rightward. An absolute value of the value obtained by subtracting x₂ from x₁ is the first deviation value in the left-right direction. A value is obtained by subtracting y₂ from y₁. If the value is a negative value, it means that the placement position of the water-cooling plate deviates downward. If the value is a positive value, it means that the placement position of the water-cooling plate deviates upward. An absolute value of the value obtained by subtracting y₂ from y₁ is the first deviation value in the up-down direction.

After the first image is acquired, an image processing algorithm is used to recognize the first region of the water-cooling plate, and determine the first position information of the first region of the water-cooling plate in the first image and the second position information of the first region of the water-cooling plate in the second image. The first deviation value and the deviation direction between the placement position and the preset position of the water-cooling plate may be determined based on the first position information and the second position information, and then the glue coating trajectory may be regulated based on the first deviation value and the deviation direction. Specifically, when the glue coating robot grips the water-cooling plate to move for glue coating, it first moves in a direction opposite to the deviation direction by a moving distance of the first deviation value, and then moves along the standard glue coating trajectory. For example, if the placement position of the water-cooling plate deviates downward by 10 mm, during glue coating, the glue coating robot grips the water-cooling plate to first move upward by 10 mm, and then the glue coating robot grips the water-cooling plate to move along the standard glue coating trajectory to complete the glue coating.

In some embodiments, the deviation comprises a deviation angle and a second deviation value, and the regulating the glue coating trajectory based on the deviation between the placement position and the preset position of the water-cooling plate comprises: regulating the glue coating trajectory based on the deviation angle and the second deviation value between the placement position and the preset position of the water-cooling plate.

The second deviation value is determined based on the first position information and the second position information, or the second deviation value may be calculated based on the first deviation value with an offset angle between -180° and 180°. Specifically, after the first image is acquired, the first position information (x₁, y₁) of the first region of the water-cooling plate in the first image is determined, and the second position information (x₂, y₂) of the first region of the water-cooling plate in the second image is determined. Based on the first position information and the second position information, the first deviation value can be calculated, comprising the difference value between x₁ and x₂ and the difference value between y₁ and y₂. The second deviation value can be calculated based on the first deviation value and a distance formula between two points, as shown in FIG. 4. For example, the difference value AB between x₁ and x₂ is 3 mm, and the difference value BC between y₁ and y₂ is 4 mm, so that the second deviation value AC is 5 mm, and the offset angle is an angle between AB and AC. The offset angle can be calculated based on the first deviation value in the x and y directions. The glue coating trajectory is regulated based on the offset angle and the second deviation value.

In some embodiments, in case of occurrence of an abnormality, an alarm can be given through a PLC, thereby handling the abnormality in time. For example, when the calculated deviation exceeds a regulation range, an alarm can be given, and a skilled person can view the deviation value and analyze the reason why the deviation exceeds the regulation range. For example, when the first region of the water-cooling plate is not recognized in the first image, an alarm can be given. The skilled person can analyze whether the first region of the water-cooling plate is blocked, whether the camera needs to be wiped, and whether the first region and feature points change due to incoming material problems. If the type and size of the current water-cooling plate change and do not match the second image, the second image can be replaced in time; and if no second image matches the current water-cooling plate, parameters of the existing second image can be modified or a new second image can be regenerated as a template.

In some embodiments, the method further comprises: regulating a motion trajectory of an apparatus for transporting the water-cooling plate based on the deviation between the placement position and the preset position of the water-cooling plate.

In the present application, the water-cooling plate is placed on a trolley, and the robot gripper grips the water-cooling plate to move, thereby transferring the water-cooling plate from the trolley to a glue coating workstation. After the robot gripper has been running for a long time, the running trajectory of the robot gripper may deviate, thereby resulting in a deviation between the placement position and the preset position of the water-cooling plate. After the deviation between the placement position and the preset position of the water-cooling plate is calculated, a motion trajectory of the robot gripper can be regulated based on the deviation, and information of the position where the water-cooling plate is gripped can be updated, thereby reducing a deviation between a next placement position and the preset position of the water-cooling plate. By continuously calculating the deviation and regulating the motion trajectory of the robot, the deviation can be gradually reduced, and the motion trajectory of the robot can be regulated towards the standard trajectory, thereby adaptively regulating the motion trajectory of the robot.

In some embodiments, after the coating the glue on the water-cooling plate, the method further comprises: acquiring a third image, the third image comprising the glue-coated water-cooling plate; and determining whether the glue-coated water-cooling plate is a qualified product based on the third image.

In the present application, after the glue is coated on the water-cooling plate based on the regulated glue coating trajectory, the water-cooling plate can be moved to a photographing position, a photographing instruction is issued from the PLC, and images of the glue-coated water-cooling plate are acquired through the camera. Specifically, the camera can photograph a partial region of the water-cooling plate each time, the robot moves the water-cooling plate a plurality of times to acquire a plurality of sub-images, each sub-image comprises different regions of the water-cooling plate, and a third image can be obtained by integrating the plurality of sub-images. After the third image is acquired, the visual industrial personal computer can analyze the glue coating quality based on the third image to determine whether the glue coating is qualified, and further determine whether the glue-coated water-cooling plate is a qualified product. The images after glue coating are acquired to check the glue coating quality, thereby avoiding other quality problems, improving the product quality, avoiding the waste of qualified battery cells, and saving resources.

Whether the glue-coated water-cooling plate is a qualified product can be determined based on the third image by detecting the third image using machine learning, and then determining whether the glue-coated water-cooling plate is a qualified product based on the detection result. Specifically, various images of unqualified glue-coated water-cooling plates can be pre-used for machine learning. One or more features associated with the glue coating quality can be extracted by machine learning from the third image. These features are used to describe various situations in the glue coating process, and may comprise the number of glue lines, texture, shape, size, whether there are breakpoints, etc. Alternatively, various images of qualified glue-coated water-cooling plates can be pre-used for machine learning. After the third image is acquired, machine learning is used to perform feature analysis on the third image acquired this time, detect potential defects, and determine whether there are glue coating defects based on the detection result.

In some embodiments, the determining whether the glue-coated water-cooling plate is a qualified product based on the third image comprises: acquiring a first parameter based on the third image, wherein the first parameter is used to represent the glue coating quality; and determining whether the glue-coated water-cooling plate is a qualified product based on the first parameter.

After the third image is acquired, an image processing algorithm can be used to extract a water-cooling plate pattern from the third image, acquire the first parameter from the water-cooling plate image, and analyze the first parameter to determine whether the glue-coated water-cooling plate is a qualified product. The first parameter may comprise at least one of the number of glue lines, a spacing between the glue lines, width of each glue line, and a distance between the glue line and an edge of the water-cooling plate.

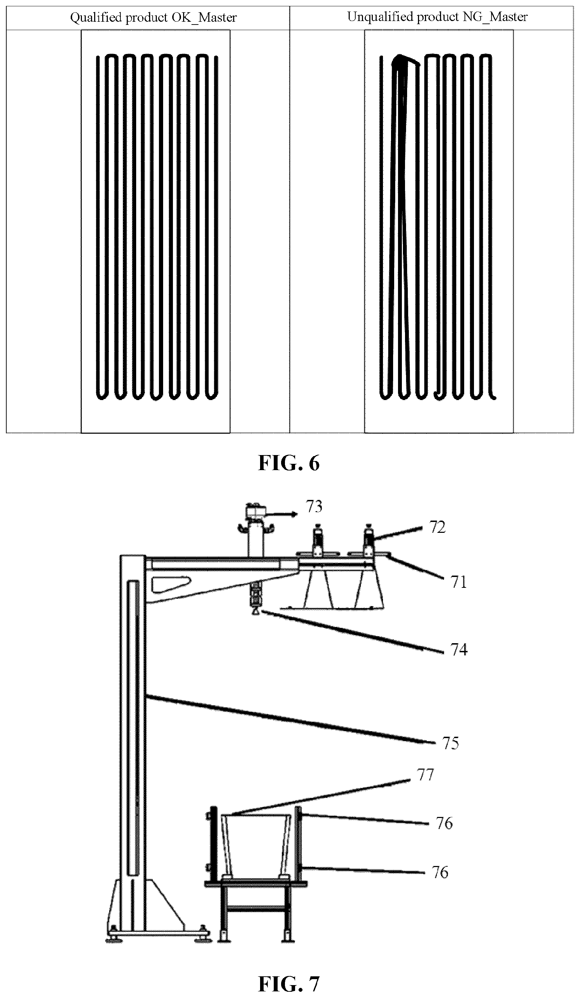

As an example, FIG. 5 shows a schematic diagram of a qualified glue-coated water-cooling plate, on the left side of which is a partial region of the glue-coated water-cooling plate photographed using 2 cameras (camera 1 and camera 2) each time, and on the right side of which is an image of the complete glue-coated water-cooling plate. As shown by the parameters annotated in FIG. 5, the number of glue lines in the qualified glue-coated water-cooling plate is 14, the spacing between the glue lines is L₁, the width of each glue line is L₂, and the distance between the glue line and an edge of the water-cooling plate comprises a distance L₃ from the glue coating head to the upper and lower edges of the water-cooling plate and a distance L₄ from the glue line to the left and right edges of the water-cooling plate. The first parameter may be used to represent the glue coating quality. FIG. 6 shows a schematic diagram of comparison between a qualified product and a defective product, with the left side showing an image of the qualified water-cooling plate and the right side showing an image of the defective product. As shown in FIG. 5, after glue coating, quality defects may occur due to too small width of the glue line, too large or too small spacing between glue lines, and too large or too small distance between the glue line and an edge of the water-cooling plate. A too large number of glue lines will cause a too small spacing between the glue lines, and a too small number of glue lines will cause a too large spacing between the glue lines. The too small spacing between the glue lines will cause a plurality of glue lines to overlap, thereby resulting in a too thick glue layer. The too small width of the glue lines or the too large spacing between the glue lines will cause a thin glue layer and a glue leakage phenomenon. The too small spacing between the glue line and the edge of the water-cooling plate will cause a glue overflow phenomenon after the battery cell is placed.

In some embodiments, the determining whether the glue-coated water-cooling plate is a qualified product based on the first parameter comprises: determining that the glue-coated water-cooling plate is a qualified product if the first parameter satisfies a preset condition.

After the first parameter is acquired from the water-cooling plate image, whether the first parameter satisfies a preset condition is determined, and then the glue-coated water-cooling plate is determined to be a qualified product if the first parameter satisfies the preset condition. The glue-coated water-cooling plate is determined to be a defective product if the first parameter fails to satisfy the preset condition. The preset condition is that all first parameters satisfy their respective threshold requirements.

For example, after the number of glue lines is acquired, whether the number of glue lines is equal to a first threshold is determined. If the number of glue lines is equal to the first threshold, the preset condition is met; and if the number of glue lines is larger than the first threshold, the number of glue lines is too large, while if the number of glue lines is smaller than the first threshold, the number of glue lines is too small, neither of which satisfies the preset condition.

After the spacings between the glue lines are acquired, whether the spacing between each two adjacent glue lines is within an error range of a second threshold is determined. If the spacing between each two adjacent glue lines is within the error range of the second threshold, the preset condition is met. If the spacing between two adjacent glue lines is not within the error range of the second threshold, it means that the spacing is too small or too large, and the preset condition is not met.

After widths of the glue lines are acquired, whether the width of each of the glue lines is within an error range of a third threshold is determined. If the width of each glue line is within the error range of the third threshold, the preset condition is met. If the width of a glue line is not within the error range of the third threshold, the preset condition is not met.

After the distance L₃ between the glue line and the upper and lower edges of the water-cooling plate is acquired, whether the L₃ is within an error range of a fourth threshold is determined. If the L₃ is within the error range of the fourth threshold, the preset condition is met; and otherwise, the preset condition is not met. After the distance L₄ between the glue line and the left and right edges of the water-cooling plate is acquired, whether the L₄ is within an error range of a fifth threshold is determined. If the L₄ is within the error range of the fifth threshold, the preset condition is met; and otherwise, the preset condition is not met.

When all acquired first parameters satisfy their respective threshold requirements, the preset condition is met, and the glue-coated water-cooling plate is determined to be a qualified product. If a parameter among the acquired first parameters fails to satisfy the threshold requirements, the preset condition is not met, and the glue-coated water-cooling plate is determined to be a defective product.

When the glue-coated water-cooling plate is detected to be a qualified product, the glue-coated water-cooling plate is transported to a next workstation, and the water-cooling plate is recorded as a qualified product. When the glue-coated water-cooling plate is detected to be a defective product, the water-cooling plate can be recorded as a defective product, and the first parameter causing the quality defect is recorded. In addition, after the glue is coated on each water-cooling plate, the system further records glue coating data corresponding to each water-cooling plate. For example, glue AB is used in the present application, and the glue coating data comprises, e.g., a flow meter volume value of glue A in water, a flow meter volume value of glue B in water, a total volume of glue A and glue B, a volume ratio of glue A to glue B, and a proportional ratio of glue A to glue B.

The PLC marks whether each water-cooling plate is a qualified product. Once a defective product is detected, the PLC can give an alarm and take an appropriate action, such as stopping the glue coating process, regulating the pressure of the glue coating head, or regulating the flow velocity or flow rate; or after receiving the alarm information, the skilled person can control the glue coating apparatus, can determine whether a quality problem is caused by an inaccurate glue proportion, etc., and can promptly correct the problem that causes a quality defect to improve production line efficiency and reduce losses.

To achieve the above purpose, an embodiment of the present application further provides a system for coating a glue on a water-cooling plate, comprising: a camera configured to acquire a first image comprising the water-cooling plate;
a visual processor configured to acquire a second image, and determine a deviation between a placement position and a preset position of the water-cooling plate based on the first image and the second image; corresponding to the aforementioned visual industrial control computer; and
a glue coating apparatus configured to regulate a glue coating trajectory based on the deviation between the placement position and the preset position of the water-cooling plate; and coat the glue on the water-cooling plate based on the regulated glue coating trajectory.

The apparatus involved in the system for coating a glue on a water-cooling plate is described in detail below with reference to FIGS. 7 to 10.

FIG. 7 is a schematic structural diagram of a glue outlet part of a glue coating apparatus provided in an embodiment of the present application. As shown in FIG. 7, the glue outlet part comprises a light source 71, a camera 72, a distribution valve 73, a distribution valve glue coating nozzle 74, a fixed bracket 75, a photoelectric sensor 76, and a glue collection drum 77. The light source 71, the camera 72, the distribution valve 73, and the distribution valve glue coating nozzle 74 are all fixed on the fixed bracket 75. The glue collection drum 77 is located directly below the distribution valve glue coating nozzle 74.

The light source 71 is configured to illuminate the water-cooling plate, and the camera 72 is configured to collect images of the water-cooling plate before and after glue coating. When the glue is coated on the water-cooling plate, the distribution valve 73 is configured to control, e.g., the glue output, flow velocity, and glue AB proportion, and the glue flows out from the distribution valve glue coating nozzle 74. The glue collection drum 77 is configured to collect the glue dripping from the distribution valve glue coating nozzle 74 after the water-cooling plate is removed, to prevent the glue from dripping onto the floor. The photoelectric sensor 76 is configured to detect whether the glue collection drum is put in place. When the glue collection drum is not put in place, the distribution valve 73 is in an off-state.

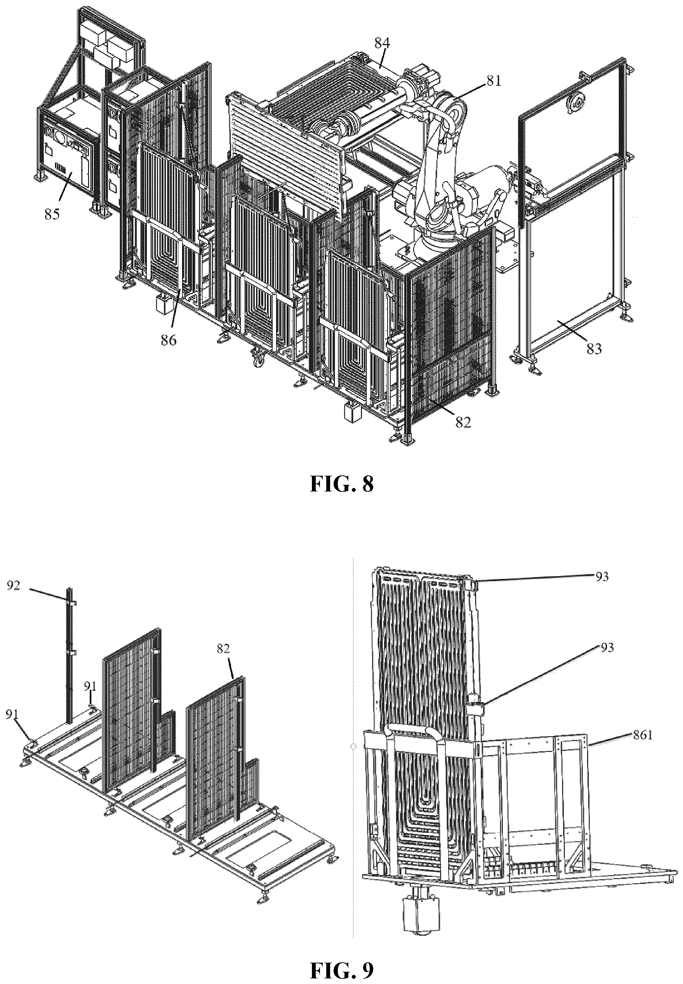

FIG. 8 is a schematic structural diagram of a glue coating robot part of a glue coating apparatus provided in an embodiment of the present application. As shown in FIG. 8, this part comprises a glue coating robot 81, a protective bracket 82, a cleaning apparatus 83, a placement table 84, and a control cabinet 85. The glue coating robot 81 can be moved through a rocker arm. The control cabinet 85 is configured to communicate with a PLC, receive a deviation between a placement position and a preset position of the water-cooling plate, regulate a glue coating trajectory, and control actions of the glue coating robot 81.

A material trolley 86 transports the water-cooling plate to the protective bracket 82, and the glue coating robot 81 grips the water-cooling plate from the protective bracket 82. Then, the glue coating robot 81 moves to the cleaning apparatus 83, and the cleaning apparatus 83 (such as a plasma cleaning machine) cleans the water-cooling plate. After the cleaning is complete, the glue coating robot 81 moves to the glue outlet part shown in FIG. 7, moves along the regulated glue coating trajectory, and coats the glue on the water-cooling plate. After the glue coating is complete, the glue coating robot 81 places the water-cooling plate on the placement table 84, and grips a next water-cooling plate from the protective bracket 82.

FIG. 9 shows a schematic structural diagram of the protection bracket 82 and the material trolley 86. As shown in FIG. 9, the material trolley 86 comprises a cart rack 861 with pulleys. A sensor 91 is installed at the bottom of the protective bracket 82 for detecting whether the material trolley reaches the protective bracket 82. A reflector 92 is installed on a side edge of the protective bracket 82. A sensor is installed on the reflector 92 for detecting the height of the water-cooling plate, then determining whether the water-cooling plate placed on the material trolley exceeds a preset height, and regulating the height of the water-cooling plate, when necessary. A sensor 93 is also installed on the protective bracket 82 for detecting whether there is a water-cooling plate on the trolley.

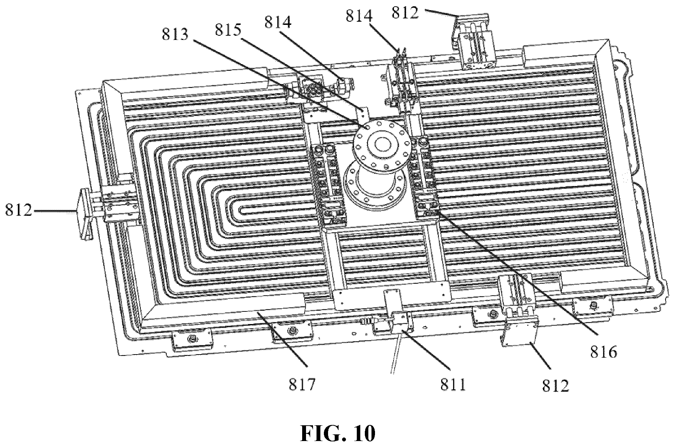

FIG. 10 shows a schematic structural diagram of a gripper part of a glue coating robot. As shown in FIG. 10, this part comprises a laser ranging sensor 811, a gripper 812, a coupler 813, a valve plate 814, a proximity switch 815, an IO module 816, and a wire slot 817. The laser ranging sensor 811 is configured to sense a distance to an object (such as the placement table 84), so that the water-cooling plate can be put down when there is an object and the object is at a safe distance. The gripper 812 is configured to fix the water-cooling plate. The gripper 812 is controlled by a cylinder, and the cylinder is controlled by the valve plate 814. A magnetic switch and a sensor are provided on the cylinder of the gripper 812, for sending the action result to the IO module 816 after the water-cooling plate is gripped or loosened. The sensor communicates with the IO module 816 through a connection wire, which is placed in the wire slot 817. The coupler 813 is connected to other parts of the glue coating robot 81 through screws. The proximity switch 815 is configured to detect whether the water-cooling plate is gripped.

**In** order to achieve the above objects, an embodiment of the present application further provides a computer-readable storage medium, storing computer instructions which, when executed on a computer, cause the computer to perform the method as mentioned above.

The above embodiments are merely used for describing the technical solutions of the present application, instead of limiting the present application; although the present application is described in detail with reference to the foregoing embodiments, persons of ordinary skill in the art should understand that: they can still make modifications on the technical solutions disclosed in the above embodiments, or perform equivalent replacements on a part of technical features thereof; and these modifications or replacements are not intended to make the essences of the corresponding technical solutions depart from the spirit and scope of the technical solutions of the embodiments of the present application, but should all be encompassed within the scope of protection of the present application.

## Claims

1. A method for coating a glue on a water-cooling plate, comprising:
acquiring a first image and a second image comprising the water-cooling plate;
determining a deviation between a placement position and a preset position of the water-cooling plate based on the first image and the second image, wherein the second image shows the water-cooling plate placed at the preset position;
regulating a glue coating trajectory based on the deviation between the placement position and the preset position of the water-cooling plate; and
coating the glue on the water-cooling plate based on the regulated glue coating trajectory.

2. The method according to claim 1, wherein the determining the deviation between the placement position and the preset position of the water-cooling plate based on the first image and the second image comprises:
determining first position information of a first region of the water-cooling plate in the first image and second position information of the first region of the water-cooling plate in the second image; and
determining the deviation between the placement position and the preset position of the water-cooling plate based on the first position information and the second position information.

3. The method according to claim 1, wherein the deviation comprises a deviation value and a deviation direction, and the regulating the glue coating trajectory based on the deviation between the placement position and the preset position of the water-cooling plate comprises:
regulating the glue coating trajectory based on the deviation value and the deviation direction between the placement position and the preset position of the water-cooling plate.

4. The method according to claim 1, wherein the method further comprises:
regulating a motion trajectory of an apparatus for transporting the water-cooling plate based on the deviation between the placement position and the preset position of the water-cooling plate.

5. The method according to any one of claims 1 to 4, wherein after the coating the glue on the water-cooling plate, the method further comprises:
acquiring a third image, the third image comprising the glue-coated water-cooling plate; and
determining whether the glue-coated water-cooling plate is a qualified product based on the third image.

6. The method according to claim 5, wherein the determining whether the glue-coated water-cooling plate is a qualified product based on the third image comprises:
acquiring a first parameter based on the third image, wherein the first parameter represents glue coating quality; and
determining whether the glue-coated water-cooling plate is a qualified product based on the first parameter.

7. The method according to claim 6, wherein the first parameter comprises at least one of: a number of glue lines, a spacing between the glue lines, width of each glue line, and a distance between the glue line and an edge of the water-cooling plate.

8. The method according to claim 7, wherein the determining whether the glue-coated water-cooling plate is a qualified product based on the first parameter comprises:
determining that the glue-coated water-cooling plate is a qualified product if the first parameter satisfies a preset condition.

9. A system for coating a glue on a water-cooling plate, comprising:
a camera configured to acquire a first image comprising the water-cooling plate;
a visual processor configured to acquire a second image, and determine a deviation between a placement position and a preset position of the water-cooling plate based on the first image and the second image; and
a glue coating apparatus configured to regulate a glue coating trajectory based on the deviation between the placement position and the preset position of the water-cooling plate, and coat the glue on the water-cooling plate based on the regulated glue coating trajectory.

10. A computer-readable storage medium, storing computer instructions which, when executed on a computer, cause the computer to perform the method according to any one of claims 1 to 8.
